# EUROPEAN PATENT SPECIFICATION

(11) **EP 1 752 249 B1**
(45) Date of publication and mention of the grant of the patent: **22.10.2008**
(21) Application number: 06254183.4
(22) Date of filing: 09.08.2006
(51) Int. Cl.: B23K 9/16, B23K 35/38, B23K 9/167

(54) **Welding method using a shielding gas comprising bewtween 0.2 % and 10 % of an oxidative gas, the rest being helium**
Schweissverfahren unter Verwendung eines Schutzgases mit zwischen 0.2 und 10 % eines oxydierenden Gases, Rest Helium
Procédé de soudage utilisant un gaz de protection comprenant de 0.2 % à 10 % d'un gaz oxydant, le reste étant de l'hélium

(30) Priority: 11.08.2005 JP 2005233162
(43) Date of publication of application: 14.02.2007
(73) Proprietor: Taiyo Nippon Sanso Corporation, Tokyo 142-8558 (JP); OSAKA UNIVERSITY, Suita-shi, Osaka 565-0871 (JP)
(72) Inventor: Ochiai, Toshimitu c/o Taiyo Nippon Sanso Corp., Shinagawa-ku Tokyo (JP); Sato, Toyoyuki c/o Taiyo Nippon Sanso Corp., Shinagawa-ku Tokyo (JP); Fujii, Hidetoshi c/o Osaka University, Suita-shi Osaka (JP); Nogi, Kiyoshi c/o Osaka University, Suita-shi Osaka (JP); Lu, Shanping, Shenyang City Liaoning 110001 (CN)
(74) Representative: Smyth, Gyles Darren

(56) References cited:
- EP-A- 1 459 830
- EP-A1- 1 559 498
- DE-A1- 19 952 043
- GB-A- 1 027 504
- JP-A- 2003 019 561
- US-A- 3 139 506
- US-A- 3 143 630

## Description

The present invention relates to a welding method according to the preamble of claim 1 (see, for example, EP-A-1 459 830).

### Description of Related Art

As conventional welding methods for structures in which steel materials such as a carbon steel, stainless steel are used as a base material, metal-arc active gas welding (MAG welding), metal-arc inert gas welding (MIG welding), plasma-arc welding and the like can be mentioned. These welding methods have been adopted when welding procedures require deep welded portions in metal and a high efficiency.

However, MAG welding and MIG welding have disadvantages that, among others, the quality of welding is likely to deteriorate, and weld flaws are likely to be generated. Also, plasma-arc welding has the disadvantage that it is difficult to use in a workshop, or the like because the permissible ranges of its grooving precision and other conditions for the procedures are stringent.

In addition to the above mentioned welding methods, tungsten inert gas welding (TIG welding) can be mentioned. TIG welding has been widely used as a welding method for structures in which high reliability is required because this method makes it possible to perform welding procedures with ease and high-quality welded portions of the metal can be obtained.

However, TIG welding has a problem that it requires a lot of time and effort because the penetration depth in the welded metal is superficial and there must be a large number of weld passes in order to make a deep weld in the metal. In particular, when austenitic stainless steels which have general-purpose uses are welded, the excessive heat deteriorates the corrosion resistance of the materials and enlarges the distortion caused from welding owing to the properties of the materials, and many other problems often occur due to the welding procedures. One current problem is, when TIG welding is applied to stainless steels which are often used at the present, the welded portion of the metal becomes much more broader and superficial penetration and the welding is often insufficient because the sulfuric content in the material is often less.

There has been an approach to these problems in which a mixed gas made by adding a minute volume of an oxidative gas to an inert gas is used as a shielding gas, so that the penetration depth is deep in a single weld pass (For example, see patent document 1).

In patent document 1, the above-mentioned shielding gas is described, and it is mentioned that the penetration depth can be made deep by setting the concentration of the oxygen gas in the shielding gas, for example, in the range of 0.1 to 0.4% by volume. Furthermore, it demonstrates that about 0.7 of a scale ratio can be achieved in the welded portion of the metal, i.e. penetration depth D/ bead width W (the value of D/W) in this case.

Patent Document 1: Japanese Unexamined Patent Application, Publication No. 2003-19561

However, only by adopting the condition in which 0.1 to 0.4% by volume of oxygen gas is added to argon gas, which is disclosed by patent document 1, the penetration depth is not always deep in welded portions of metal, the excellent quality of the weldment is not always attained, and this has been mentioned as a problem. That is, because the other conditions for welding are unclear and insufficient, it is difficult to achieve welding in which the above-described value of D/W is larger than 0.7 so that the weld penetration is much deeper.

The present invention was realized in view of the above-described problems. The object of the present invention is to provide a shielding gas, a welding method by using the same, and the weldment thereof, wherein the weld penetration into the welded portion of the metal can be made deep without deteriorating the quality of the weld by setting appropriate conditions for welding.

### SUMMARY OF THE INVENTION

In order to achieve the above-described object, a welding method according to claim 1 is defined.

In the present invention, the use of helium gas as a main gas makes it possible that the direction of the convection in the molten pool of the welded metal suppresses a force which acts from inside to outside (i.e. dragging force) due to the effect of the plasma current. Moreover, the shielding gas includes 0.2% by volume or more (preferably 0.4% by volume or more) of an oxidative gas, so that the surface tension of a central portion of the surface becomes larger than that of the circumferential portion as the temperature raises, and the convection in the molten pool also acts inward. Accordingly, because the high-temperature molten metal directly under the arc flows in the depth direction, the deep weld penetration can be achieved, such that it is possible for the scale ratio in the welded portion of the metal, i.e. the value of D/W, to reach 0.8 or more (preferably 1.0 or more).

The welded material (weldment), for example, includes a metal such as stainless steel.

It is preferable that the welding current be 100 A or more.

According to the present invention, the welding speed is 3.5 mm/second or less and the arc length is 2.5 mm or less.

In the present invention, the value of D/W can be made large by using a shielding gas comprising: 0.2% by volume or more (preferably 0.4% by volume or more) of an oxidative gas; and the balance being helium gas. This can achieve the deep weld penetration.

In the present invention, a high-quality weldment can be attained because the welded portion of the metal is deep, and the penetration depth is deep with respect to the bead width.

With respect to the shielding gas of the present invention, the penetration depth can be made much deeper than that of conventional gases, and the scale ratio of the welded potion of the metal, i.e. the value of D/W can be made larger. Because of such deep penetration, even if the weldment is thick, it can be welded in one pass, or the number of passes can be decreased. Accordingly, the total amount of the heat input can be reduced.

Moreover, according to the method by using the shielding gas of the present invention, the value of D/W can be made large and the weld penetration can be made deep by using a shielding gas which includes 0.2% by volume or more (preferably 0.4% by volume or more) of a oxidative gas, and the balance being helium gas. Also, according to the present invention and in addition to the appropriate concentration of the oxidative gas included in the shielding gas, a much deeper weld penetration is obtained by adopting conditions for the welding speed and the arc length.

### BRIEF DESCRIPTION OF THE DRAWINGS

Figure 1 shows a graph representing the relationship between the concentration of oxygen in the shielding gas and the value of D/W or the concentration of oxygen in the welded metal, which is based on the results of Example 1.
Figure 2 shows a graph representing the same as that of Figure 1 (indicated on a 0 to 1.0% by volume scale of the concentration of oxygen in the shielding gas).
Figure 3 shows photos of welded portions and images of the corresponding cross-sectional views of the welded portion of metal in Example 1.
Figure 4 shows a graph representing the relationship between the welding current and the value of D/W or the concentration of oxygen in the welded metal, which is based on the results of Example 2.
Figure 5 shows images of the cross-sectional views of the welded portion of the metal in Example 2.
Figure 6 shows a graph representing the relationship between the welding speed and the value of D/W, which is based on the results of Example 3.
Figure 7 shows photos of welded portions and images of the corresponding cross-sectional and horizontal views of the welded portion of the metal in Example 3.
Figure 8 shows a graph representing the relationship between the arc length and the value of D/W, which is based on the results of Example 4.
Figure 9 shows photos of welded portions and images of the corresponding cross-sectional and horizontal views of the welded portion of the metal in Example 4.
Figure 10 shows photos of welded portions and images of the corresponding cross-sectional and horizontal views which are characteristic of the results of the speed-variation experiment in the Variation Example, in which 0.6% by volume of carbon dioxide gas was used as an oxidative gas.

In the Figures and the corresponding Tables, "% by volume" is abbreviated as "vol.%".

### DETAILED DESCRIPTION OF THE PREFERRED EMBODIMENT

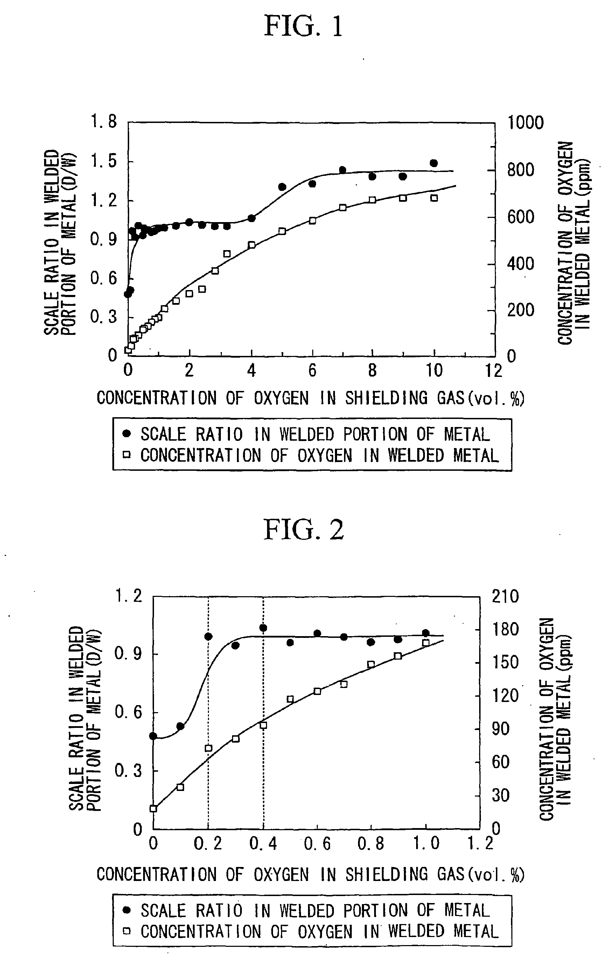

Hereinafter, the embodiment for the welding method are explained based on Figures 1 to 10.

In the shielding gas and the method for using the same according to this embodiment, a shielding gas which includes 0.2% by-volume or more (preferably 0.4% by volume or more) of an oxidative gas and the balance being helium gas is used for non-consumable electrode-based gas-shielding welding in which welding is carried out by generating an arc between an electrode and the weldment.

Herein, the oxidative gas is a gas which dissociates and then becomes oxidative in the high-temperature arc, and, for example, oxygen gas, carbon dioxide gas, and the like can be used because of their lack of hazardous effects to humans. The shielding gas can be prepared by simply adding the oxidative gas to the helium gas.

In this way, if helium gas is used as a main gas, then, it is possible for the direction of the convection in the molten pool of the welded metal to suppress a force which acts inside to outside (dragging force) due to the effect of the plasma current. Moreover, by including 0.2% by volume or more (preferably 0.4% by volume or more) of the oxidative gas therein, the surface tension of the central portion of the surface becomes larger than that of the circumferential portion as the temperature raises, and the convection in the molten pool (Marangoni convection) also acts inward.

Therefore, the high-temperature molten metal directly under the arc flows in the depth direction and deep weld penetration is formed, so that it is possible for the scale ratio in the welded portion of the metal, i.e. the value of D/W, to reach 0.8 or more (preferably 1.0 or more) as it improves compared to 0.7 which is conventionally disclosed (explained in detail in Examples).

Moreover, because the weld penetration can be made deeper in this way, it can be welded in one pass, or the number of passes can be decreased even if the weldment is thick. Accordingly, the amount of the heat input can be reduced.

Moreover, if the concentration of the oxidative gas in the shielding gas, according to the present invention, is less than 0.2% by volume, the value of D/W is less than 0.8. Also, if the concentration of the oxidative gas in the shielding gas is between 0 to 10% by volume, then, the value of D/W becomes stable. The upper limit of the concentration of the oxidative gas is, according to the present invention, about 10% by volume because the degree of oxidation increases as the oxidative gas increases.

Furthermore, according to the present invention, the efficiency of welding can be improved, and a much deeper weld penetration can be obtained without deteriorating the quality of welding when welding is carried out by adopting the following conditions with the welding speed of 3.5 mm/second or less (preferably 2 mm/second or less), and with the arc length of 2.5 mm or less (preferably 1 mm or less) in addition to the above-described shielding gas, which includes the oxidative gas in the appropriate concentration. Further this is also improved by adopting a welding current of 100 A or more (preferably 120 A or more).

In addition, the value of D/W will be less than 0.8 when the welding current is less than 100 A, the welding speed is more than 3.5 mm/second, and the arc length is more than 2.5 mm.

The weldment is a weldment welded by using the above-described method, wherein the shielding gas, which includes the oxidative gas in the appropriate concentration, and the penetration depth is 0.8 or more (preferably 1.0 or more) with respect to the bead width. In this case, the concentration of oxygen in the welded metal is in the range of 70 to 700 ppm. A deep weld penetration can be achieved and a high quality welding can be attained in this range.

As described above, the concentration of oxygen in the welded metal refers to the concentration of oxygen in the welded portion of the metal. This concentration of oxygen in the welded metal can be obtained by measuring the concentration of oxygen in the welded portion of the metal after welding, for example, by way of the infrared-absorption method after fusion under inert gas.

Hereinafter, an explanation is given for the Examples to demonstrate the welding method according to the present invention.

### EXAMPLES

At first, the conditions which were commonly adopted in each of Examples 1 to 4 are explained. With regard to the weldment, SUS 304, namely a board of stainless steel 100 mm thick, in which the concentration of sulfuric content was low (sulfuric content: 5 ppm, and oxygen content 10 ppm), was used as a sample material (base material). The composition of this stainless steel is shown in Table 1.

**Table 1**

| Composition | C | Si | Mn | Ni | Cr | P | S | O | Fe |
|---|---|---|---|---|---|---|---|---|---|
| Content (% by weight) | 0.06 | 0.44 | 0.96 | 8.19 | 18.22 | 0.027 | 0.001 | 0.0038 | the balance |

The Examples were carried out by using the method of TIG welding in which a W-2%ThO₂-typ electrode (a tungsten electrode including 2% thorium oxide) whose diameter is 2.4 mm and whose angle of apex is 60° was used, and the polarity of the electric current was DCEN. The shielding gas was a mixed gas made by adding oxygen gas (O₂), i.e. a oxidative gas, to helium gas (He), i.e. an inert gas, which is a shielding gas used for non-consumable electrode-based gas-shielded welding. The flow rate was 10 L/minute. In addition, the nozzle used in each of Examples 1 to 4 was a single nozzle from which the shielding gas flowed to the circumference of the electrode.

Examples 1 to 4 were conducted based on these common conditions. The index representing the property of the obtained weld penetration, i.e. a scale ratio of the welded portion of the metal "penetration depth D / bead width W" (hereinafter, abbreviated as "value of D/W") was confirmed in each of Examples 1 to 4 while varying the concentration of oxygen gas (% by volume) in the shielding gas in Example 1, the welding current (A) in Example 2, the welding speed (mm/second) in Example 3, and the arc length (mm) in Example 4. In the Examples, the values of D/W were evaluated by considering the value of 0.8 as a first threshold, which was further improved by more than 10% of the value of D/W of 0.7. This value of 0.7 is disclosed in, for example, Japanese Unexamined Patent Application, Publication No. 2003-19561, and is a value of D/W (the bead width: 5 mm, and the weld penetration: 3.5 mm) in which the weld penetration was improved compared to the prior art. Furthermore, they were further evaluated based on the value of 1.0 as a second threshold, which was improved by more than 40% of the value of D/W of 0.7.

Hereinafter, Examples 1 to 4 are explained in detail.

### (Example 1)

In Example 1, a shielding gas prepared by adding oxygen gas to helium gas was used. The welding current was 160 A, the welding speed was 2 mm/second, the arc length was 1.0 mm, and the other conditions were based on the above-described common conditions. The values of D/W were measured and the cross section of the welded portion of the metal was observed while varying the concentration of oxygen in the shielding gas in the range of 0 to 10% by volume.

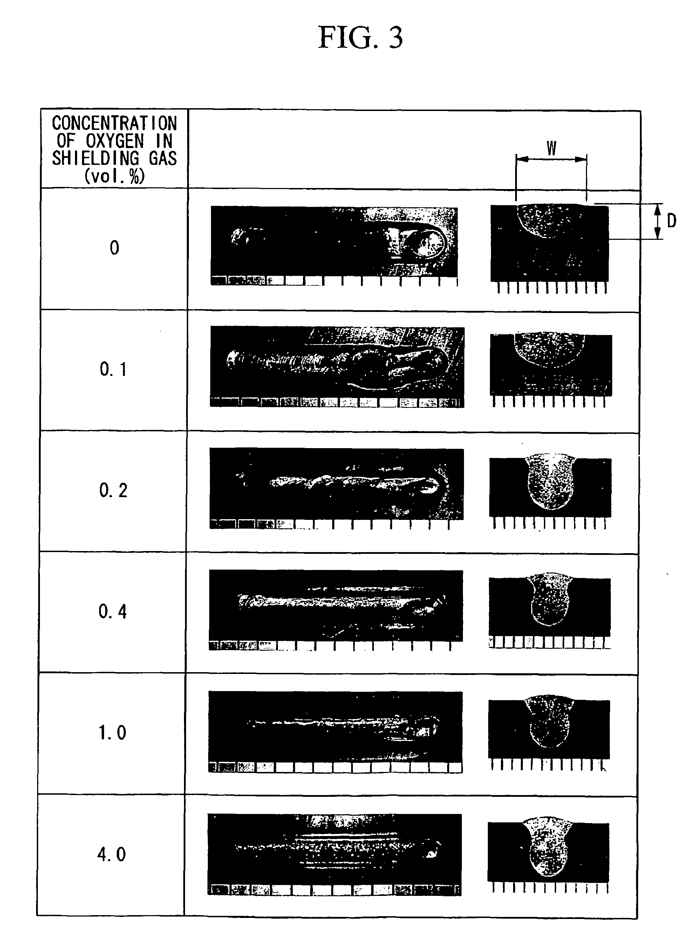

Figure 1 shows a graph representing the relationship between the concentration of oxygen in the shielding gas and the value of D/W which is based on the results of Example 1. Figure 2 shows a graph representing the same as that of the Figure 1 (indicated on 0 to 1.0% by volume scale in the concentration of oxygen in the shielding gas). Figure 3 shows photos of welded portions and images of the corresponding cross-sectional view of the welded portion of the metal in Example 1. In addition, the relationship between the concentration of oxygen in the shielding gas and the oxygen concentration in the welded metal is also shown in Figures 1 or 2. The results of the measurement in Example 1 are shown in Table 2.

In Examples, the concentration of oxygen in the welded metal was obtained by measuring the concentration of oxygen in the welded portion of the metal after welding based on the infrared-absorption method after fusion under inert gas (JIS H 1620 (5)).

**Table 2**

| Concentration of oxygen (vol.%) | D/W | Concentration of oxygen in the welded metal (ppm) |
|---|---|---|
| 0.0 | 0.48 | 18.9 |
| 0.1 | 0.51 | 36.9 |
| 0.2 | 0.97 | 72.9 |
| 0.3 | 0.93 | 77.4 |
| 0.4 | 1.02 | 87.5 |
| 0.5 | 0.95 | 113.0 |
| 0.6 | 0.99 | 123.4 |
| 0.7 | 0.98 | 129.1 |
| 0.8 | 0.96 | 146.8 |
| 0.9 | 0.97 | 154.9 |
| 1.0 | 0.99 | 167.1 |
| 1.2 | 1.00 | 201.4 |
| 1.6 | 1.02 | 237.3 |
| 2.0 | 1.05 | 269.4 |
| 2.4 | 1.03 | 285.4 |
| 2.8 | 1.02 | 370.6 |
| 3.2 | 1.01 | 446.8 |
| 4.0 | 1.08 | 479.0 |
| 5.0 | 1.31 | 543.7 |
| 6.0 | 1.34 | 591.2 |
| 7.0 | 1.45 | 647.4 |
| 8.0 | 1.39 | 674.5 |
| 9.0 | 1.39 | 683.3 |
| 10.0 | 1.49 | 684.5 |

As shown in Figures 1 to 3 and Table 2, the value of D/W suddenly increases when the concentration of oxygen in the shielding gas is in the range of about 0.1 to about 0.2% by volume. Also, it is evident that the value of D/W satisfies the first threshold of 0.8 or more when the concentration of oxygen in the shielding gas is 0.2% by volume or more. In particular, when the concentration of oxygen in the shielding gas is 0.4% by volume or more, the value of D/W is stable around 1.0, and almost satisfies the value of 1.0 or more although several values of D/W between 0.4 to 1.2% by volume are a bit less than the second threshold of 1.0.

As shown in Figure 1, it can be confirmed that the higher the concentration of oxygen in the shielding gas is, the larger the value of D/W is in general. Also, as shown in Figure 3, it can be confirmed that the bead width W of the welded portion of the metal tends to be narrow, and that the penetration depth D tends to be deep.

Therefore, it is preferable that the concentration of oxygen in the shielding gas be 0.2% by volume or more (preferably 0.4% by volume).

Also, with regard to effects of the concentration of oxygen in the shielding gas on the welded metal, the following assumption can be made.

In order to achieve the deep penetration in a welded portion of the metal, the direction of convection in the molten pool needs to be inward in general (the direction in which it flows down in the depth direction from a central portion of the surface of the welded portion of the metal, and flows up along the side of the metal workpiece to the surface, and back down through the central portion).

In general, surface tension causes a flow form a part in which the surface tension is small to a part in which the surface tension is large, and the surface tension decreases as the temperature of substance raises. Due to this, the central portion of the surface of the welded portion of the metal directly under the arc becomes high-temperature, and the surface tension becomes smaller than that of its circumferential portion in which the temperature is lower. Consequently, the convection in the molten pool acts outward. However, the surface tension of the central portion of the surface can be made larger than that of its circumferential portion by adding a predetermined amount of oxygen gas (as well as carbon dioxide gas) to the stainless steel used as a sample material as the temperature increases, so that the convection in the molten pool acts inward. Therefore, the high-temperature molten metal directly under the arc flows in the depth direction and a deep penetration can be formed.

The value of D/W becomes large and a deep weld penetration was confirmed in the results of Example 1 when the concentration of oxygen in the shielding gas was 0.2% by volume or more. In this case, the concentration of oxygen in the welded metal was 70 ppm or more. Moreover, it was found that the concentration of oxygen in the welded metal became almost stable (about 700 ppm) in the range of 8 to 10% by volume. From this analysis, it can be assumed that the above-described direction of the convection reversed itself from outward to inward when the concentration of oxygen in the welded metal is in the range of 70 to 700 ppm, and a deep weld penetration can be achieved in this range.

### (Example 2)

In Example 2, a shielding gas was prepared by adding oxygen gas to helium gas, such that the concentration of oxygen in the shielding gas was 0.4% by volume. The welding speed was 2 mm/second, the arc length was 1.0 mm, and the other conditions were based on the above-described common conditions. The values of D/W were measured and the cross section of the welded portion of the metal was observed while varying the welding current in the range of 80 to 250 A.

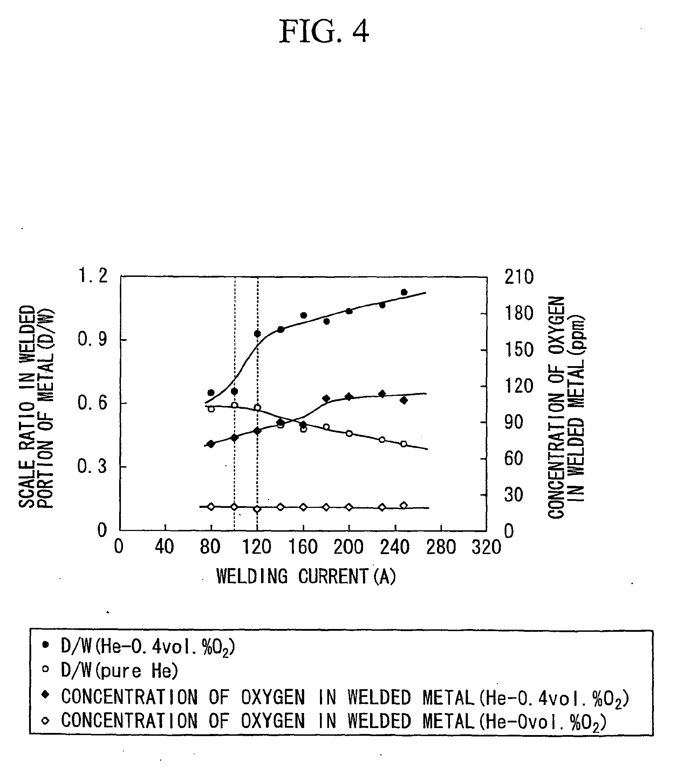

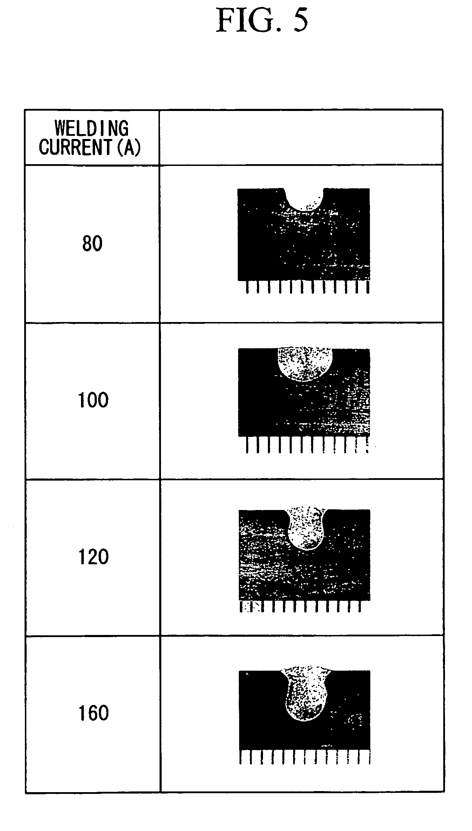

Figure 4 shows a graph representing the relationship between the welding current and the value of D/W which is based on the results of Example 2. Figure 5 shows photos of welded portions and images of the corresponding images representing cross-sectional view of the welded portion of the metal in Example 2. In addition, a relationship between the concentration of oxygen in the shielding gas and the oxygen concentration in the welded metal is also shown in Figure 4. The results of the measurement in Example 2 are shown in Table 3.

**Table 3**

| Welding Current (A) | He + 0.4 vol.% O₂ | | Pure He | |
|---|---|---|---|---|
| | D/W | Concentration of Oxygen in welded metal (ppm) | D/W | Concentration of Oxygen in welded metal (ppm) |
| 80 | 0.65 | 71.9 | 0.57 | 19.2 |
| 100 | 0.66 | 76.6 | 0.59 | 19.2 |
| 120 | 0.93 | 82.8 | 0.58 | 18.1 |
| 140 | 0.95 | 90.1 | 0.50 | 19.0 |
| 160 | 1.02 | 87.5 | 0.48 | 18.9 |
| 180 | 0.99 | 108.3 | 0.49 | 18.9 |
| 200 | 1.04 | 110.25 | 0.46 | 18.7 |
| 230 | 1.07 | 112.25 | 0.43 | 19.6 |
| 250 | 1.13 | 107.65 | 0.41 | 20.8 |

As shown in Figure 4, Figure 5, and Table 3, when the welding current was over about 90 A, the slope of the graph of the value of D/W increased. That is, the value of D/W increased as the welding current increased. It is evident that the value of D/W can be made 0.8 or more, which is the value of the first threshold, by setting the welding current to 100 A or more. In particular, by setting the welding current to 120 A or more, the value of D/W can be made 1.0 or more, i.e. the value of the second threshold. Therefore, the appropriate range of the welding current is 100 A or more, more preferably 120 A or more.

Also, the concentration of oxygen in the welded metal was about 75 ppm when the welding current was 90 A at which the rate of increase of D/W escalated. This is why it can be assumed that the direction of the convection in the welded metal reversed itself from outward to inward at this point.

In addition, in Figure 4, the case in which the shielding gas was a simple helium gas (pure He) was also shown. According to this, the concentration of oxygen in the welded metal was stable around 20 ppm when the welding current is in the range of 80 to 250 A. Moreover, the value of D/W decreases when the welding current is 80 A or more. That is, unless the oxidative gas is added to the shielding gas, the concentration of oxygen in the welded metal is not in the range of 70 to 700 ppm, which was considered as an appropriate range in Example 1. This is why it was assumed that the reversion of the convection did not occur and that the penetration depth became superficial.

### (Example 3)

In Example 3, the same shielding gas as in Example 2 was used. The welding current was 160 A, the arc length was 1.0 mm, and the other conditions were based on the above-described common conditions. The values of D/W were measured and the cross section of the welded portion of the metal was observed while varying the welding speed in the range of 0.75 to 5.0 mm/second.

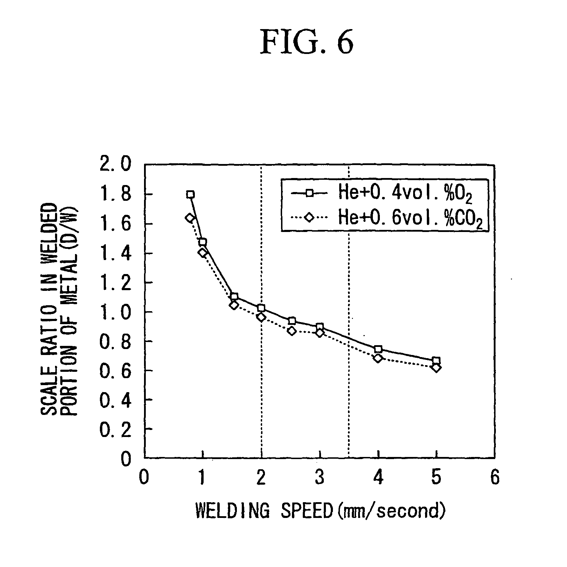

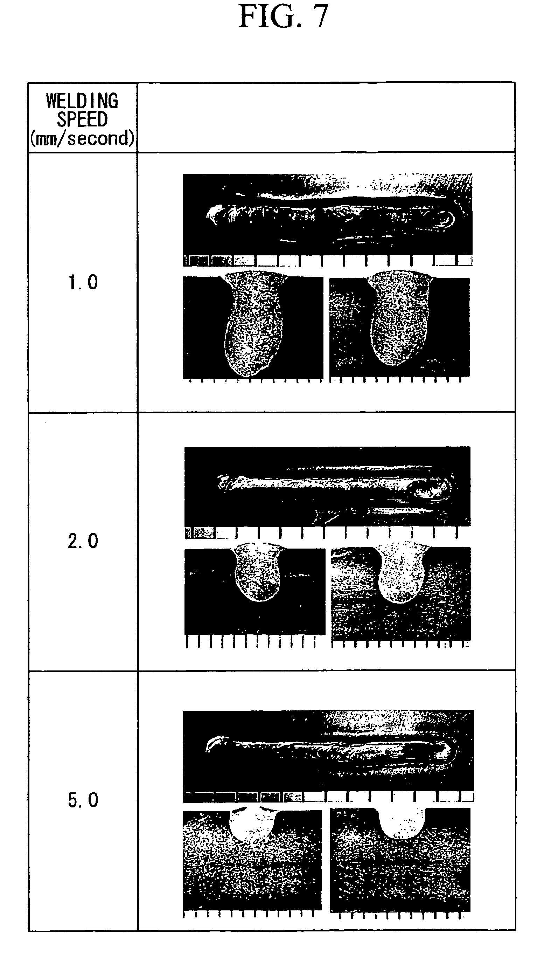

Figure 6 shows a graph representing the relationship between the welding speed and the value of D/W which is based on the results of the Example 3. Figure 7 shows photos of welded portions and images of the corresponding cross-sectional and horizontal views of the welded portion of the metal in Example 3. The results of the measurement in Example 3 are shown in Table 4.

**Table 4**

| Welding speed (mm/second) | D/W | Concentration of oxygen in welded metal (ppm) |
|---|---|---|
| 0.75 | 1.80 | 76.1 |
| 1.0 | 1.48 | 94.9 |
| 1.5 | 1.11 | 101.5 |
| 2.0 | 1.02 | 87.5 |
| 2.5 | 0.94 | 94.4 |
| 3.0 | 0.89 | 92.2 |
| 4.0 | 0.75 | 82.5 |
| 5.0 | 0.66 | 78.0 |

As shown in Figure 6, Figure 7, and Table 4, it was confirmed that the value of D/W was 0.8 or more, i.e. the value of the first threshold, when the welding speed was 3.5 mm/second or less. In particular, when the welding speed was 2.0 mm/second or less, the value of D/W was 1.0 or more, i.e. the value of the second threshold. That is, it is evident that the weld penetration grows deep as the welding speed becomes slow. Therefore, it is preferable that the welding speed be 3.5 mm/second or less (preferably 2.0 mm/second or less).

Moreover, as shown in Table 4, it is confirmed that the concentration of oxygen in the welded metal be 70 ppm or more in all.

In addition, the case in which carbon dioxide gas (mixing concentration: 0.6% by volume) was used as an oxidative gas is also shown in Figure 6. This detail is explained in the Variation Example as described below.

### (Example 4)

In Example 4, the same shielding gas as in Examples 2 and 3 was used. The welding current was 160 A, the welding speed was 2.0 mm/second, and the other conditions were based on the above-described common conditions. The values of D/W were measured and the cross section of the welded portion of the metal was observed while varying the arc length in the range of 1 to 7 mm.

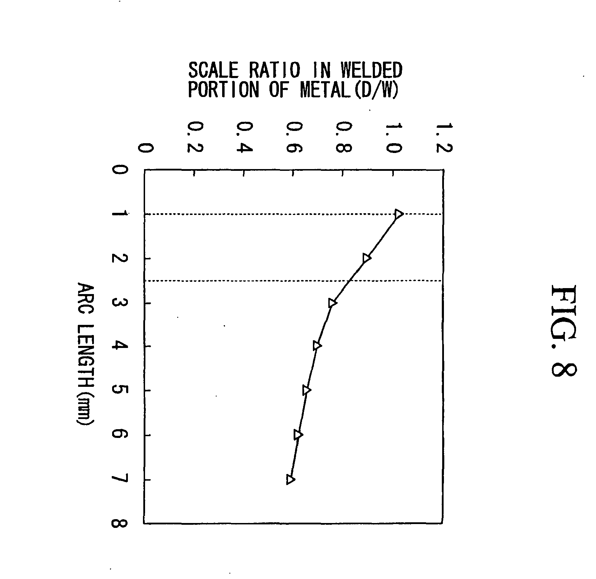

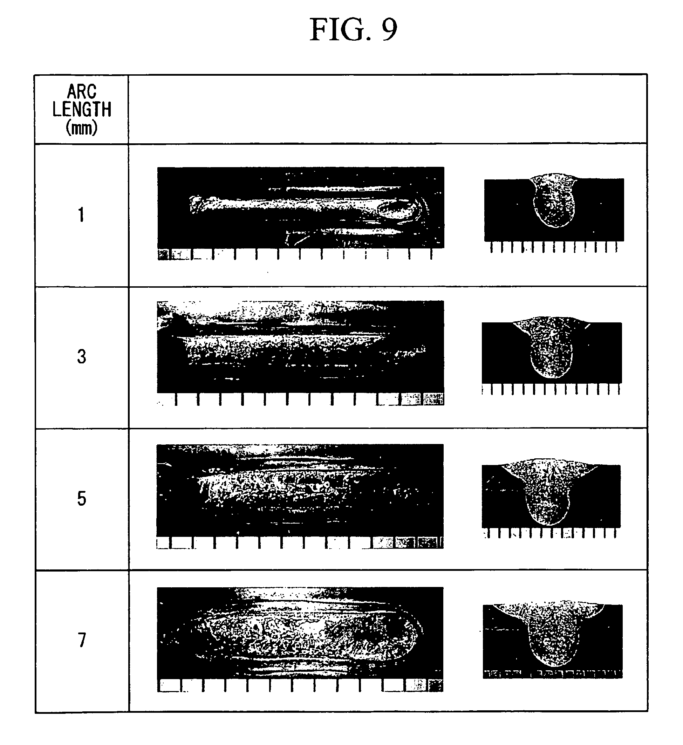

Figure 8 shows a graph representing the relationship between the arc length and the value of D/W which is based on the results of Example 4. Figure 9 shows photos of the welded portions and images of the corresponding cross-sectional and horizontal views of the welded portion of the metal in Example 4. The results of the measurements in Example 4 are shown in Table 5.

**Table 5**

| Arc length (mm) | D/W | Arc voltage (V) | Concentration of oxygen in welded metal (ppm) |
|---|---|---|---|
| 1 | 1.02 | 14.0 | 87.5 |
| 2 | 0.89 | 16.7 | 109.9 |
| 3 | 0.75 | 18.7 | 152.4 |
| 4 | 0.69 | 20.5 | 178.5 |
| 5 | 0.65 | 22.1 | 214.3 |
| 6 | 0.62 | 23.7 | 242.2 |
| 7 | 0.59 | 25.0 | 253.5 |

As shown in Figure 8, it was confirmed that the value of D/W could be 0.8 or more, i.e. the value of the first threshold, when the arc length was 2.5 mm or less. In particular, when the arc length was 1.0 mm or less, the value of D/W was 1.0 or more, i.e. the value of the second threshold (see Table 5). That is, as shown in Figure 9, the arc width became wide and the weld penetration grew deep when the arc length was 2.5 mm or more. However, it was evident that the bead width W also became wide and that the value of D/W became small as it was below 0.8. Therefore, it is preferable that the arc length be 2.5 mm or less (preferably 1.0 mm or less).

Next, the effect of the use of helium gas in the above described Examples 1 to 4 is explained.

It was confirmed that the pressure to the surface of the molten pool in the welded metal brought by the addition of helium gas was lower than that of the case in which argon gas is added. From this point, it is assumed that the plasma current of helium gas is smaller than that of argon gas. That is, it is also assumed that, due to the effect of the plasma current, the force which acts from inside to outside (i.e. dragging force) when using helium gas is smaller than that of argon gas. Consequently, the force which hampers the inward convection (the direction in which the weld penetration goes ahead) can be made small. Also, the temperature at the central portion of the molted pool increases due to the constriction of the arc and its thermal gradient increases, so that the inward Marangoni convection acts more strongly.

Thus, in the present invention, the use of helium gas as a main gas makes it possible to suppress the dragging force. Furthermore, the weld penetration can be made deeper by setting the welding current, the welding speed, and the arc length in the appropriate ranges which were demonstrated in the above-described Examples 1 to 4.

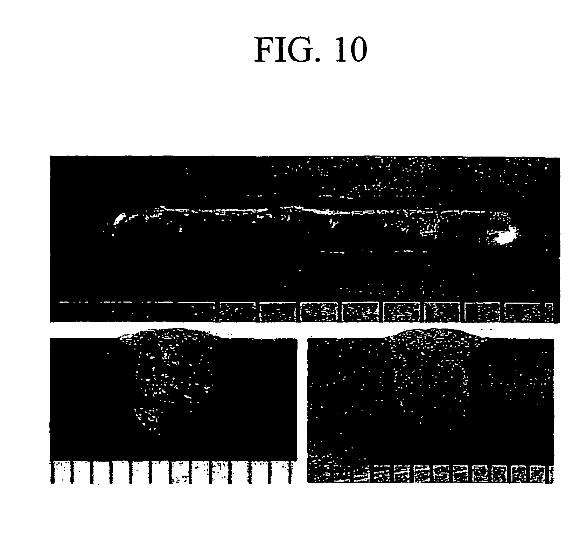

Next, the Variation Example according to the welding method is explained based on Figure 10.

### (Variation Example)

Figure 10 shows photos of welded portions and images of the corresponding cross-sectional and horizontal views which are characteristic of the results of the speed-variation experiment of the Variation Example. In this experiment, 0.6% by volume of carbon dioxide gas was used as an oxidative gas.

In the present invention, carbon dioxide gas can be mentioned as an example of the oxidative gas in addition to oxygen gas. In the Variation Example, the value of D/W was confirmed while varying the welding speed in the same way as in Example 3 except that carbon dioxide gas was used as the oxidative gas instead of using oxygen gas (See Figure 6).

The conditions for the Experiment using carbon dioxide gas shown in Figure 10 were a welding speed of 2 mm/second and welding current of 160 A. In this case, the weld penetration was slightly superficial compared with the results of the Example in which 0.4% by volume of oxygen gas was used under the same conditions (See Figure 7).

Also, as shown in Figure 6, the value of D/W in the 0.6 vol% carbon dioxide gas was smaller than that of the 0.4 vol% oxygen gas. From this, it is considered that a deeper penetration can be obtained when using oxygen gas, as opposed to carbon dioxide gas. Accordingly, it is expected that carbon dioxide gas needs to be added in a larger amount compared to oxygen gas.

Furthermore, the transition of the graph of the 0.6 vol% carbon dioxide gas is almost the same as that of the 0.4 vol% oxygen gas. From this point, it is assumed that the same effects as in the case of oxygen gas can be obtained in the case of carbon dioxide gas. However, it is preferable that the appropriate welding conditions such as its mixing concentration, the welding current, and the arc length, etc. be confirmed by carrying out the same experiments as Example 1 to 4.

So far, the preferred embodiments and the Variation Example of the welding method of the present invention are explained. However, additions, omissions, substitutions, and other modifications can be made without departing from the scope of the present invention as defined in the appended claims. Accordingly, the invention is not to be considered as limited by the foregoing description and is only limited by the scope of the appended claims.

For example, TIG welding is adopted in the above-described embodiments and the Variation Example, but the welding method is not limited to this. It was confirmed based on the results of Examples 1 to 4 that the deep penetration was due to the use of helium gas. Moreover, it was also confirmed that the deep penetration due to the addition of the oxidative gas to helium gas was an effect caused from the reversion of the convection due to the oxygen present in the welded metal, and the suppression of the dragging force on the surface of the molten pool.

From this point of view, the welding method is not limited to TIG welding, and the other gas-shielded arc welding methods such as MIG welding, MAG welding, or the like may be applied.

Also, a single nozzle was used in the embodiments and the Variation Example, but it is not limited to use of this. For example, the electrode is easily damaged due to the oxidation because the above-described shielding gas includes the oxidative gas. In order to prevent this, it is preferable that a double-nozzle be used. This double-nozle is comprised of an inner nozzle which supplies the shielding gas from the vicinity of the electrode generating the arc, and an outer nozzle which supplies the shielding gas from the outside of the inner nozzle. They are arranged doubly and concentrically around the electrode. For example, the electrode can be prevented from deteriorating and the value of D/W can be also made large by discharging simple helium gas from the inner nozzle in the vicinity of the electrode, and by discharging the shielding gas prepared by adding oxygen gas or carbon dioxide gas to helium gas from the outer nozzle which is an outer circumference of the inner nozzle.

If this embodiment is adopted, it is effective that the use of simple helium gas in the inner nozzle and the combination of helium gas and oxygen gas in the outer nozzle are optimized as Follow-up Experiment 1 in terms of the appropriate conditions of the concentration of the oxidative gas in the shielding gas, the welding current, the welding speed, and the arc length, as well as the above-described Examples 1 to 4. As Follow-up Experiment 2, it is better that the use of simple helium gas in the inner nozzle and the combination of helium gas and carbon dioxide gas in the outer nozzle are optimized in the same way.

Also, the arc-start will be inferior if simple helium gas is used as the shielding gas which is supplied from the inner nozzle. This inferior arc-start may be improved by adding an appropriate amount of argon gas thereto.

Moreover, the high-temperature surface of the welded portion will be oxidized because the oxidative gas is added to helium gas. This oxidation can be improved by adding, for example, 9% or less, preferably 3 to 7% of hydrogen gas thereto, and the appearance can be improved. Therefore, the same effect can be obtained in the outer nozzle by using a gas in which the oxidative gas is added to the above-described gas used in the inner nozzle.

If this embodiment is adopted, in view of the above-mentioned Follow-up Experiments, the combination of helium gas and hydrogen gas in the inner nozzle and the combination of helium gas and carbon dioxide gas in the outer nozzle as Follow-up Experiment 3; and the combination of helium gas, hydrogen gas, and argon gas in the inner nozzle and the combination of helium gas and carbon dioxide gas in the outer nozzle as Follow-up Experiment 4 can be done. It is also effective that, with regard to these, the appropriate conditions of the concentration of the oxidative gas in the shielding gas, the welding current, the welding speed, and the arc length are optimized, as well as the above-described Examples 1 to 4.

## Claims

1. A welding method comprising:
welding a weldment by using a shielding gas that includes 0.2% to 10% by volume of an oxidative gas and the balance being helium gas, wherein the welding is carried out by generating an arc between an electrode and a weldment at a welding speed of 3.5 mm/second or less, and **characterized by** an arc length of 2.5 mm or less.

2. The welding method according to claim 1, wherein the welding is carried out at a current of a 100 A or more.

3. The welding method according to claim 1, wherein the shielding gas includes 0.4% to 10% by volume of the oxidative gas and the balance being helium gas.

4. The welding method according to claim 1, wherein the welding is non-consumable electrode-based gas-shielded welding.

## Patentansprüche

1. Schweißverfahren, umfassend:
Schweißen einer Schweißkonstruktion unter Verwendung eines Schutzgases, worin 0,2% bis 10 Volumenprozent eines oxidativen Gases einbezogen sind und der Rest Heliumgas ist, wobei das Schweißen ausgeführt wird durch Bildung eines Bogens zwischen einer Elektrode und einer Schweißkonstruktion bei einer Schweißgeschwindigkeit von 3,5 mm pro Sekunde oder weniger und **gekennzeichnet durch** eine Bogenlänge von 2,5 mm oder weniger.

2. Schweißverfahren nach Anspruch 1, wobei das Schweißen ausgeführt wird bei einem Strom von 100 A oder mehr.

3. Schweißverfahren nach Anspruch 1, wobei in das Schutzgas 0,4% bis 10 Volumenprozent des oxidativen Gases einbezogen sind und der Rest Heliumgas ist.

4. Schweißverfahren nach Anspruch 1, wobei das Schweißen ein Schutzgasschweißen ist, das auf einer nicht selbstverzehrenden Elektrode beruht.

## Revendications

1. Procédé de soudage comprenant:
le soudage d'un assemblage soudé en utilisant un gaz de protection qui inclut de 0,2% à 10% en volume d'un gaz oxydant et le reste étant du gaz hélium, dans lequel le soudage est réalisé en générant un arc entre une électrode et un assemblage soudé à une vitesse de soudage de 3,5 mm/seconde ou moins et **caractérisé par** une longueur d'arc de 2,5 mm ou moins.

2. Procédé de soudage suivant la revendication 1, dans lequel le soudage est réalisé à un courant de 100 A ou plus.

3. Procédé de soudage suivant la revendication 1, dans lequel le gaz de protection inclut de 0,4% à 10% en volume du gaz oxydant et le reste étant du gaz hélium.

4. Procédé de soudage suivant la revendication 1, dans lequel le soudage est un soudage protégé par un gaz basé sur une électrode non consommable.
